# EUROPEAN PATENT SPECIFICATION

(11) **EP 3 208 478 B1**
(45) Date of publication and mention of the grant of the patent: **20.01.2021**
(21) Application number: 16156219.4
(22) Date of filing: 18.02.2016
(51) Int. Cl.: F16D 1/08

(54) **METHOD AND SYSTEM FOR DIGITAL OPTIMIZATION OF TORQUE LIMITERS AND CONNECTION COUPLINGS**
VERFAHREN UND SYSTEM ZUR DIGITALEN OPTIMIERUNG VON DREHMOMENTBEGRENZERN UND VERBINDUNGSKUPPLUNGEN
PROCÉDÉ ET SYSTÈME POUR OPTIMISATION NUMÉRIQUE DES LIMITEURS DE COUPLE ET DES COUPLAGES DE CONNEXION

(43) Date of publication of application: 23.08.2017
(73) Proprietor: Voith Patent GmbH, 89522 Heidenheim (DE)
(72) Inventor: Bergström, David, 82494 Hudiksvall (SE); Mehlich, Andreas, 48429 Rheine (DE); Bohler, Axel, 82532 Iggesund (SE); Weisbjerg, Sigvard, 82491 Hudigsvall (SE)
(74) Representative: Voith Patent GmbH - Patentabteilung

(56) References cited:
- WO-A1-98/15751
- FR-A1- 2 341 778
- US-A- 5 839 883

## Description

Connection couplings and safety connection couplings comprising an outer sleeve and an inner sleeve, wherein the inner sleeve and the outer sleeve are connected by friction force are well known. For providing the friction connection a hydraulic chamber is pressurized. The transferrable torque is predetermined by the chosen pressure in the hydraulic chamber. To fill the hydraulic chamber with hydraulic fluid the connection coupling comprises a fluid inlet connected to the hydraulic chamber and connectable to a pump for pressurization.

For example, Voith Turbo Safeset AB delivers connection couplings, for example HyGrip. These connection couplings are backlash-free, frictional, quick setting/releasing shaft-hub connections. The setting or releasing occurs hydraulically. Depending on the application, various operating principles are available, all of which offer the advantage of a backlash-free pressure connection. A description of the HyGrip Coupling is published in the company flyer "Connection Couplings HyCon, HyLoc and HyGrip", G1578 published in 2010. The connection is provided by pressurization of the coupling connection.

Voith Turbo Safeset AB delivers torque transmitting connection couplings with an overload protection under the name SafeSet, SmartSet and SlipSet.

The SafeSet principle is simple: friction and flexibility. No material fatigue, a constant torque transmission and adaptability. These safety connection couplings comprise a release mechanism at a preset torque. So an immediately release is realized for over-torque situations. The SafeSet coupling includes a twin-walled hollow sleeve. A friction connection is provided by surface pressure. Therefore the twin wallet hollow sleeve is expanded by pressurized hydraulic oil. The integrated shear tube holds pressure to ensure a constant, but easily adaptable torque transmission. In an overload situation the coupling slips and the shear tube shears off. Oil pressure drops and the frictional surfaces separate. The coupling rotates on bearings without transmitting any torque.

After a pressure release, a connection is re-established by pressurization of the connection with a predetermined pressure. The pressure has to be looked up in documentation. It is very important to look up the correct value; otherwise there is the risk that the connection does not work in the predicted way. If a coupling connections or safety coupling does not transfer the predicted torque then operation time decreases.

By WO 98/15751 A1 a safety clutch is disclosed for transmitting torque between two coaxial machine parts. The safety clutch comprises a basic body for the at least indirect frictionally engaged connection of two machine parts, and at least one thin-walled sleeve which forms a wall of an annular chamber upon which pressure medium can act. Further provided is at least one feed line which extends through the basic clutch body to the annular chamber and can be closed in an air- and fluid-tight manner by closure elements, in particular closure valves. Also provided is a pressure-relief mechanism which can act at least indirectly on the closure elements. The pressure-relief mechanism is coupled to an arrangement for detecting a disturbance variable. The clutch comprises means which activate the pressure-relief mechanism when the influencing quantity occurs.

By FR 2 341 778, also published as DE 27 07 530, a friction coupling is disclosed. This disclosure focuses on the dependence of fluid in dependence of the temperature. The safety coupling comprises a pressurized volume to couple an input shaft with an output shaft. The pressure in the pressurized volumes depends on the temperature and thereby the tranfereable torque differs in dependence of the temperature. To reduce this effect, it is disclosed to reduce the volume of the pressurized volume of the safety coupling.

US 5,839,883 discloses a system and method for controlling a materials handling system. The materials handling system preferably includes a feed system, a positive displacement pump and a disposal system. The feed system includes a material feeder, which in the preferred embodiment is a screw feeder driven by a drive and a transition housing. The material feeder forces material through the transition housing to an inlet of the positive displacement pump. The control system includes a pressure sensor, located on the transition housing, connected to a computer. The computer is also connected to the drive of the screw feeder. During operation of the materials handling system, the pressure sensor senses a parameter indicative of material pressure within the transition housing and sends a signal to the computer representative of this parameter. The computer provides a control signal to the feed system to control operation of the materials handling system as a function of the sensed parameter.

It is the object of the invention to provide a more comfortable coupling connection and system for pressurization and re-pressurization of the coupling connection and method of pressurization and re-pressurization. Further it is an object of the invention to make the pressurization and re-pressurization more secure. Further it is an object of the invention to document the history of pressurization. The predetermined pressure can differ between the same types of safety couplings because of manufactory reasons, especially fabrication tolerances. Further safety couplings can be adapted to the use case by choosing different predetermined pressures.

The object of the invention is solved by the features of the independent claims.

The coupling connection comprises a memory device containing information about the predetermined pressure. The information about the predetermined pressure is also mentioned as predetermined pressure value. It is easy to look up the correct predetermined pressure value for the use case and the coupling connection. It is possible that tables are stored in the memory device, so that the predetermined pressure value can be extracted from the stored table.

A coupling connection is a device for connecting an input shaft with an output shaft wherein a hydraulic chamber of the coupling connection is pressurized.

The coupling connection can be used as safety coupling slipping when a predetermined torque is exceeded. The coupling connection can further be used to provide a connection of two sleeves which can be engaged and disengaged like HyGrip.

Especially if different connection couplings are used in one environment, it is comfortable to look up the correct predetermined pressure value after release by reading the information on the memory device. The risk to use wrong information is avoided. It is preferred to arranged the memory device on or near by the coupling.

So pressurization and re-pressurization are more secure, because the predetermined pressure value is linked to the connection coupling. So using a wrong manual is avoided.

In a preferred embodiment the connection coupling comprises a memory device containing a ROM and an RAM. In the ROM a connection coupling identification and predetermined pressure values in relation to transferrable torque can be stored. The RAM can be used to store information about the history of pressurization of the connection coupling or the usage and the service intervals. Further it is possible to adapt the connection coupling to the real use case and safe adaption values in the RAM.

In a further embodiment the system for re-pressurization comprises a control device, preferable handheld device. For example Smartphones, Tablets and portable computers and further portable electronic devices comprising the possibility to establish a data connection to further devices or modules are handheld device. Examples of the further modules or devices are a memory element and/or a controllable or programmable valve. The weight of such handheld devices are usually no more than two kilograms.

The control device comprises an interface. The memory device and the control device are able to establish a data connection. Using a wireless connection, for example Bluetooth or W-Lan or NFC, is very comfortable because no wire connection and no interface openings are needed. The control device can be used to read the information stored in the memory device. In a preferred embodiment the handheld device is used to display information from the memory device.

In a further embodiment of the system the handheld device is connectable to the memory device and/or pump. In a preferred system the handheld device is connectable wireless to the memory device and the pump. So only the pressure line has to be linked to the coupling connection for pressurization by hardware.

In a further embodiment of the coupling connection the memory device is integrated into the coupling connection. Especially the memory device is integrated into the outer sleeve of the coupling connection. The coupling connections are usually made of metal. To provide the possibility of wireless connection, a shielding by the coupling connection should be avoided. In a very preferred embodiment the memory device is arranged in a recess of the surface of the outer sleeve of the connection coupling. In a preferred embodiment an RFID tag is used as memory device wherein the RFID Tag comprises at least the information of the predetermined pressure value.

In a preferred embodiment of the coupling connection the memory device is permanently fixed to the coupling connection.

In a preferred embodiment the memory device comprises a communication interface for establishing a connection to control device or handheld device or display device. The interface can be a connector for a wired connection to the handheld device. Then the risk of connection problems is reduced. Further the interface can be a protocol used for establishing a wireless connection, for example Bluetooth, NFC, Zigbee. A wireless connection has the advantage that there are no opening needed and the memory device can be totally sealed. By the connection of the handheld device and the memory device, it is possible to update or to adept the information stored in the memory device. So the stored information can be adjusted to the use case and the individual coupling connection.

In a preferred embodiment of the system the handheld device can be connected to the pump. The pump is used for pressurization of the hydraulic chamber. It is possible to regulate the pressurization of the hydraulic chamber by the handheld device. Further it is possible to store the values of the pressure in the hydraulic chamber after the pressurization is finished.

In a preferred embodiment the control device is an integrated part of the pump. The pressurization of the hydraulic chamber is controlled by the control device. A display device can be assigned to the control device to display the progress controlled by the control device. Further the display device can be used for input of data into the control device.

In a preferred embodiment the handheld device is linked to the memory device and the pump. So it is possible to store the information about at least of the last pressurization on the memory device. Further it is possible to store a history of pressurizations on the memory device of that coupling connection.

In the case the applied and transferred torque is measured, it is possible to analyze the behavior of the coupling connection in dependence to the pressurization. It is possible to adapt the predetermined pressure in dependence of the measurements, especially to adapt the pressure to ensure a slipping at a predetermined torque.

The Coupling connection of the invention comprises a hydraulic chamber for establishing a coupling connection between an outer sleeve and an inner sleeve. Further the coupling connection comprises a memory device. In the memory device at least the value of the predetermined pressure value is stored. In a preferred embodiment in the memory device at least the value of the last pressurization is also stored.

In a preferred embodiment of the system comprises a torque measurement sensor for generating measurements of the torque transferred by the coupling connection.

In a preferred embodiment of the coupling connection the torque applied and/or transferred to the coupling connection is measured by a torque sensor of the coupling connection. In a further embodiment the torque measurement values are measured by torque sensors not part of the coupling connection, but the measurement results are transferred to the memory device of the coupling connection.

In a preferred embodiment the coupling connection comprises a pressure sensor for providing pressure values of the pressure in the hydraulic chamber.

The invention is directed on a method for establishing a connection of an input sleeve with an output sleeve of a coupling connection. The input sleeve and the output sleeve are arranged coaxial. The input sleeve is interacting with the output sleeve by friction. The input sleeve can be arranged as an inner sleeve radial inside of the outer sleeve and the output sleeve can be arranged radial outside as an outer sleeve or vice versa. The coupling is established by pressurization of a hydraulic chamber providing a friction force between the inner sleeve and the outer sleeve comprising the steps of:
- reading out a predetermined pressure value from a memory device of the coupling connection
- pressurization of the hydraulic chamber by a pump
- displaying the information of the predetermined pressure value and the pressure information of the hydraulic chamber on a display.

In a preferred method the value of pressurization is transferred to the memory device after finalization of pressurization. The transferred value of pressurization is stored in the memory device.

In a preferred method the pressurization of the hydraulic chamber is controlled by the handheld device. Therefor the handheld device is interacting with the pump used for pressurization.

In a preferred method the method comprises the steps of:
- using the handheld device to read out an individual identification of the coupling connection fixed on the coupling connection and
- the handheld device provides the predetermined pressure value
- the handheld device controls the pressurization of the hydraulic chamber and preferable displays the progress of pressurization.

### BRIEF DESCRIPTION OF THE DRAWINGS

The invention, together with objects and advantages thereof, may best be understood by reference to the following description of the present preferred embodiments together with the accompanying drawings.
Fig. 1: System comprising a coupling connection during the pressurization process;
Fig. 2: handheld device connected to the memory device
Fig. 3: coupling connection comprising an inner sleeve and an outer sleeve

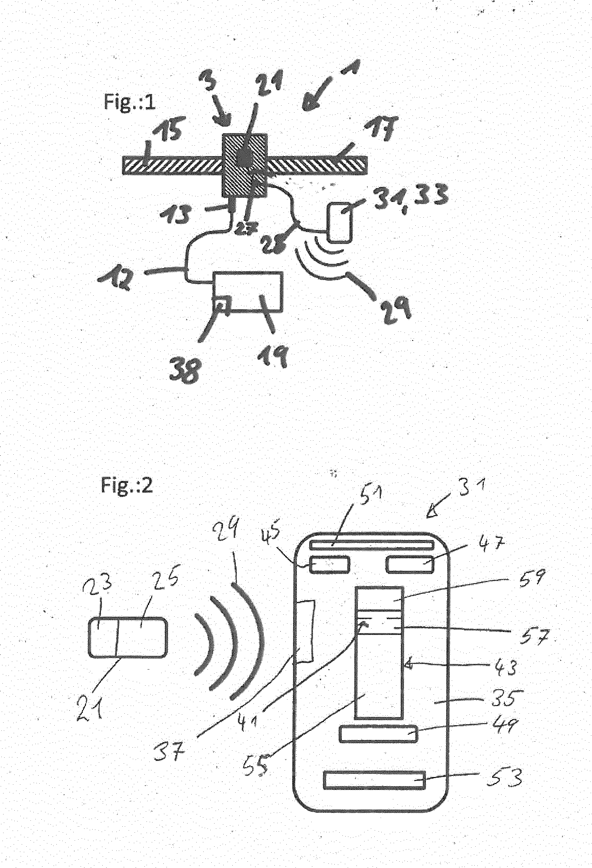

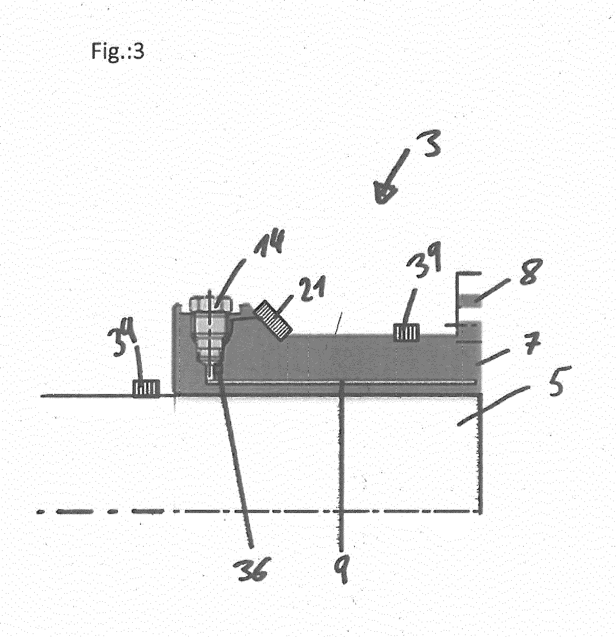

In figure 1 a system 1 comprising a coupling connection 3 is disclosed. The coupling connection 3 connects an input shaft 15 with an output shaft 17. The input shaft 15 is connected with an inner sleeve 5, shown in figure 3. The output shaft 17 is connected to an outer sleeve 7, also shown in figure 3. In figure 3 the output shaft 17 is connectable to the outer sleeve 7 by a flange 8. The coupling connection 3 comprises a memory device 21. The memory device 21 is connected to or comprises an interface 27. In the embodiment of figure 1 the memory device 21 is connected by wire with the interface 27. A control device 31 in form of handheld device 33 is connectable to the interface 27. In this case the control device 31 is connected to the interface 27 by wire 28. The control device 31 is a handheld device 33. The handheld device 33 comprises a display 35. Further the handheld device 33 is connected to a pump 19 by a wireless connection 29. The pump 19 is hydraulically connected by a pump line 12 with the hydraulic chamber 9 of the coupling connection 3. The pump 19 can be controlled by the handheld device 33. Further the coupling connection comprises a valve 13 or a screw plug for closing an opening of the hydraulic chamber 9.

The coupling connection 3 establishes a connection between the input shaft 15 and the output shaft 17 by frictional engagement. The fictional engagement is realized by pressurization of a hydraulic chamber 9 of the coupling connection 3. For pressurization of the hydraulic chamber 9 the pump 19 is connected to the hydraulic chamber 9. The handheld device is connected to the memory device of the coupling connection 3. The handheld device 33 reads out the predetermined pressure value stored in the memory device 21. The memory device 33 establishes a wireless connection to the pump. The pressurization of the hydraulic chamber is controlled by the handheld device 33. A pressure sensor 36, 38 detects the pressure in the hydraulic chamber 9. The pressure sensor 38 can be part of the pump. The measurements of the pressure sensor 38 are transferred to the handheld device 33. The handheld device 33 controls a pressurization of the hydraulic chamber 9 up to the predetermined pressure value. After pressurization the hydraulic chamber 9 is closed by a valve 13 or a screw plug. The pump 19 can be disconnected from the coupling connection 3. The pressure value of the pressurization is transferred to the memory device 21 and stored in the memory device 21. Especially in the case of a damage of the coupling connection 3 it is possible to read out the value of the last pressurization. If also information of the applied torque and the transferred torque is available, it is possible to determinate at which torque values the damage occurs. Further it is possible to read out the value of the last pressurization for analyzation.

Figure 2 discloses a handheld device 33 in more detail. The handheld device 33 comprises a display 35. The display comprises a pressure display panel 43 for displaying the pressure ranges of low pressure 55, predetermined pressure range 57 and overload pressure range 59. The actual pressure information is indicated by a line 41. The display comprises a pressure history panel 45, a predetermined pressure value panel 47 and a pump pressure panel 49. Further an ID of the coupling connection 3 is displayed in a coupling connection ID panel 51. Further there is a field for process selection 53. There the user can choose different options, for example, display of the pressurization history, service history, and event history or pressurization of the coupling connection 3. In the case of a safety coupling as the coupling connection 3 the event history comprises events of slipping or disengagement. The handheld device comprises an communication interface 37. The handheld device 33 is connected to a memory device 21 by a wireless connection 29. The memory device 21 comprises a ROM 23 and a RAM 25.

Figure 3 discloses a coupling connection 3 detailed. The coupling connection 3 comprises an inner sleeve 5 and an outer sleeve 7. The outer sleeve 7 comprises a hydraulic chamber 9. The hydraulic chamber 9 is closed by plug screw 14. The outer sleeve 7 comprises a flange 8 for connection to the output shaft 17. Torque sensors 39 are arranged for determining torque transferred by the coupling connection 3. A pressure sensor 36 is integrated into the outer sleeve 7 for pressure measurements. The memory device 21 is arranged at the outer surface of the outer sleeve 7.

The terms and expressions employed herein are used as terms of the description and not of limitation, and there is no intention, in the use of such terms and expressions, of excluding any equivalents of the features shown and described or portions thereof, but it is recognized that various modifications are possible within the scope of the claims.

### Reference list

- 1: system
- 3: coupling connection
- 5: inner sleeve
- 7: outer sleeve
- 8: flange
- 9: hydraulic chamber
- 12: pump line
- 13: valve
- 14: plug screw
- 15: input shaft
- 17: output shaft
- 19: pump
- 21: memory device
- 23: ROM
- 25: RAM
- 27: interface
- 29: wireless connection
- 31: control device
- 33: handheld device
- 35: display device, display
- 37: communication interface of handheld device
- 36: pressure sensor (coupling device)
- 38: pressure sensor (pump)
- 39: torque sensor
- 41: pressure information
- 43: pressure display panel
- 45: pressure history panel
- 47: predetermined pressure value panel
- 49: pump pressure panel
- 51: coupling connection ID panel
- 53: field for process selection

## Claims

1. Coupling connection (3) with a hydraulic chamber (9), a fluid inlet (13) connectable to a pump (19) for pressurization of the hydraulic chamber (9) to provide a coupling **characterized in that**,
the coupling connection (3) comprises a memory device (21), wherein the memory device (21) comprises a communication interface establishing a wireless connection to a control device or handheld device or display device.

2. Coupling connection (3) of claim 1, wherein for providing a connection between an input shaft (15) and an output shaft (17) the hydraulic chamber (9) is pressurized with a predetermined pressure,
**characterized in that**,
the hydraulic chamber (9) is pressurized with a predetermined pressure and wherein the memory device contains information about the predetermined pressure.

3. Coupling connection (3) of claim 1,
**characterized in that**
the memory device (21) comprises a ROM (23) wherein the predetermined pressure information is stored and a RAM (25) wherein measured pressure values are stored.

4. Coupling connection (3) of one of the previous claims,
**characterized in that**
the memory device (21) is integrated into the coupling connection (3), especially is integrated into an outer sleeve (7) of the coupling connection (3), or is permanently fixed to the coupling connection (3).

5. Coupling connection (3) of one of the previous claims,
**characterized in that**
the memory device (21) comprises an interface (27) establishing a connection to the handheld device (33).

6. Coupling connection (3) of claim 5,
**characterized in that**
the coupling connection (3) comprises a torque measurement sensor (39) for generating measurements of the torque transferred by the coupling connection (3) and a pressure sensor (38) for providing pressure values of the pressure in the hydraulic chamber (9).

7. System (1) for pressurization of a coupling connection of one of the previous claims, wherein a pump (19) is connectable to the coupling connection,
**characterized in that**
a control device (31) is a handheld device (33) connectable to the memory device (21) and / or pump (19) wireless.

8. System (1) of one of the previous claims,
**characterized in that**
the control device (31) is connectable to the pump (19).

9. System (1) of one of the claims 7 or 8,
**characterized in that**
the control device (31) comprises a display for displaying information stored in the memory device (21).

10. System (1) of one of the claims 7 to 9,
wherein a control device (31) is an integrated part of the pump (19).

11. Method for establishing a connection of an inner sleeve (5) with an outer sleeve (7) of a coupling connection (3) of one of the previous claims by the use of a system of one of the claims 7 to 10, wherein the coupling is established by pressurization of the hydraulic chamber (9) providing a friction force between the inner sleeve (5) and the outer sleeve (7), comprising the steps of:
• reading out a predetermined pressure value from a memory device (21) of the coupling connection (3) by wireless connection
• displaying the information of the predetermined pressure value and the transferred pressure information on a display
• pressurization of the hydraulic chamber (9) by a pump (19).

12. Method of claim 11,
wherein after finalization of the pressurization final pressure value is transferred and stored in the memory device (21).

13. Method of claim 11 or 12,
wherein the predetermined pressure value is transferred to a handheld device (33) and the data of pressurization are transferred to the handheld device (33) and both information are displayed by the handheld device.

14. Method of one of the claims 11 to 13 **characterized by** the steps of:
• using the handheld (33) device to read out an individual identification of the coupling connection (3) fixed on the coupling connection (3) and
• the handheld device (33) provides the predetermined pressure value
• the handheld device (33) controls the pressurization of the hydraulic chamber (9) and preferable displays the progress of pressurization.

## Patentansprüche

1. Kopplungsverbindung (3) mit einer hydraulischen Kammer (9), wobei ein Fluideinlass (13) mit einer Pumpe (19) verbunden sein kann, um die hydraulische Kammer (9) mit Druck zu beaufschlagen, um eine Kopplung breitzustellen, **dadurch gekennzeichnet, dass** die Kopplungsverbindung (3) eine Speichervorrichtung (21) umfasst, wobei die Speichervorrichtung (21) eine Kommunikationsschnittstelle umfasst, die eine drahtlose Verbindung mit einer Steuervorrichtung oder einer handgeführten Vorrichtung oder einer Anzeigevorrichtung herstellt.

2. Kopplungsverbindung (3) nach Anspruch 1, wobei die hydraulische Kammer (9) zum Bereitstellen einer Verbindung zwischen einer Antriebswelle (15) und einer Abtriebswelle (17) mit einem festgelegten Druck beaufschlagt ist,
**dadurch gekennzeichnet, dass**
die hydraulische Kammer (9) mit einem festgelegten Druck beaufschlagt ist und wobei die Speichervorrichtung Informationen über den festgelegten Druck enthält.

3. Kopplungsverbindung (3) nach Anspruch 1,
**dadurch gekennzeichnet, dass**
die Speichervorrichtung (21) einen ROM (23) umfasst, in dem die Informationen über den festgelegten Druck gespeichert sind, und einen RAM (25), in dem gemessene Druckwerte gespeichert sind.

4. Kopplungsverbindung (3) nach einem der vorhergehenden Ansprüche,
**dadurch gekennzeichnet, dass**
die Speichervorrichtung (21) in die Kopplungsverbindung (3) integriert ist, insbesondere in eine äußere Hülse (7) der Kopplungsverbindung (3) integriert ist, oder dauerhaft an der Kopplungsverbindung (3) befestigt ist.

5. Kopplungsverbindung (3) nach einem der vorhergehenden Ansprüche,
**dadurch gekennzeichnet, dass**
die Speichervorrichtung (21) eine Schnittstelle (27) umfasst, die eine Verbindung mit einer handgeführten Vorrichtung (33) herstellt.

6. Kopplungsverbindung (3) nach Anspruch 5,
**dadurch gekennzeichnet, dass**
die Kopplungsverbindung (3) einen Drehmomentmesssensor (39) zum Erzeugen von Messwerten des Drehmoments, das durch die Kopplungsverbindung (3) übertragen wird, und einen Drucksensor (38) zum Bereitstellen von Druckwerten des Drucks in der hydraulischen Kammer (9) umfasst.

7. System (1) zur Beaufschlagung einer Kopplungsverbindung nach einem der vorhergehenden Ansprüche mit Druck, wobei eine Pumpe (19) mit der Kopplungsverbindung verbunden sein kann,
**dadurch gekennzeichnet, dass**
eine Steuervorrichtung (31) eine handgeführte Vorrichtung (33) ist, die mit der Speichervorrichtung (21) und/oder Pumpe (19) drahtlos verbunden sein kann.

8. System (1) nach einem der vorhergehenden Ansprüche,
**dadurch gekennzeichnet, dass**
die Steuervorrichtung (31) mit der Pumpe (19) verbunden sein kann.

9. System (1) nach einem der Ansprüche 7 oder 8,
**dadurch gekennzeichnet, dass**
die Steuervorrichtung (31) eine Anzeige zum Anzeigen von Informationen, die in der Speichervorrichtung (21) gespeichert sind, umfasst.

10. System (1) nach einem der Ansprüche 7 bis 9,
wobei die Steuervorrichtung (31) ein integrierter Teil der Pumpe (19) ist.

11. Verfahren zum Herstellen einer Verbindung einer inneren Hülse (5) mit einer äußeren Hülse (7) einer Kopplungsverbindung (3) nach einem der vorhergehenden Ansprüche durch die Verwendung eines Systems nach einem der Ansprüche 7 bis 10, wobei die Kopplung durch Beaufschlagen der hydraulischen Kammer (9) mit Druck hergestellt wird, was eine Reibkraft zwischen der inneren Hülse (5) und der äußeren Hülse (7) bereitstellt, folgende Schritte umfassend:
• Auslesen eines festgelegten Druckwertes aus einer Speichervorrichtung (21) der Kopplungsverbindung (3) durch eine drahtlose Verbindung
• Anzeigen der Informationen des festgelegten Druckwertes und der übertragenen Druckinformationen auf einer Anzeige
• Beaufschlagen der hydraulischen Kammer (9) mit Druck durch eine Pumpe (19).

12. Verfahren nach Anspruch 11,
wobei nach Abschluss der Beaufschlagung mit Druck der finale Druckwert übertragen und in der Speichervorrichtung (21) gespeichert wird.

13. Verfahren nach Anspruch 11 oder 12,
wobei der festgelegte Druckwert zu einer handgeführten Vorrichtung (33) übertragen wird und die Daten der Beaufschlagung mit Druck zu der handgeführten Vorrichtung (33) übertragen werden und beide Informationen durch die handgeführte Vorrichtung angezeigt werden.

14. Verfahren nach einem der Ansprüche 11 bis 13, **gekennzeichnet durch** die folgenden Schritte:
• Verwenden der handgeführten Vorrichtung (33) zum Auslesen einer individuellen Kennung der Kopplungsverbindung (3), die an der Kopplungsverbindung (3) befestigt ist, und
• die handgeführte Vorrichtung (33) stellt den festgelegten Druckwert bereit
• die handgeführte Vorrichtung (33) steuert die Beaufschlagung der hydraulischen Kammer (9) mit Druck und zeigt vorzugsweise den Fortschritt der Beaufschlagung mit Druck an.

## Revendications

1. Liaison de couplage (3) avec une chambre hydraulique (9), une entrée de fluide (13) pouvant être raccordée à une pompe (19) pour la mise sous pression de la chambre hydraulique (9) pour fournir un couplage
**caractérisé en ce que**,
la liaison de couplage (3) comprend un dispositif de mémoire (21), le dispositif de mémoire (21) comprenant une interface de communication établissant une connexion sans fil avec un dispositif de commande ou un dispositif portatif ou un dispositif d'affichage.

2. Liaison de couplage (3) selon la revendication 1, pour établir une liaison entre un arbre d'entrée (15) et un arbre de sortie (17), la chambre hydraulique (9) étant mise sous pression avec une pression prédéterminée,
**caractérisé en ce que**,
la chambre hydraulique (9) est mise sous pression avec une pression prédéterminée et le dispositif de mémoire contenant des informations sur la pression prédéterminée.

3. Liaison de couplage (3) selon la revendication 1,
**caractérisé en ce que**
le dispositif de mémoire (21) comprend une ROM (23) dans laquelle les informations de pression prédéterminées sont stockées, et une RAM (25) dans laquelle les valeurs de pression mesurées sont stockées.

4. Liaison de couplage (3) selon l'une des revendications précédentes,
**caractérisé en ce que**
le dispositif de mémoire (21) est intégré dans la liaison de couplage (3), notamment dans un manchon extérieur (7) de la liaison de couplage (3), ou est fixé de manière permanente à la liaison de couplage (3).

5. Liaison de couplage (3) selon l'une des revendications précédentes,
**caractérisé en ce que**
le dispositif de mémoire (21) comprend une interface (27) établissant une liaison avec le dispositif portatif (33) .

6. Liaison de couplage (3) selon la revendication 5,
**caractérisé en ce que**
la liaison de couplage (3) comprend un capteur de mesure de couple (39) pour générer des mesures du couple transféré par la liaison de couplage (3) et un capteur de pression (38) pour fournir des valeurs de pression de la pression dans la chambre hydraulique (9).

7. Système (1) de mise sous pression d'une liaison de couplage selon l'une des revendications précédentes, une pompe (19) pouvant être raccordée à la liaison de couplage,
**caractérisé en ce que**
un dispositif de commande (31) est un dispositif portatif (33) pouvant être raccordé sans fil au dispositif de mémoire (21) et/ou à la pompe (19).

8. Système (1) selon l'une des revendications précédentes,
**caractérisé en ce que**
le dispositif de commande (31) peut être raccordé à la pompe (19).

9. Système (1) selon l'une des revendications 7 ou 8,
**caractérisé en ce que**
le dispositif de commande (31) comprend un écran pour afficher les informations stockées dans le dispositif de mémoire (21).

10. Système (1) selon l'une des revendications 7 à 9, un dispositif de commande (31) étant une partie intégrée de la pompe (19).

11. Procédé pour établir une liaison d'un manchon intérieur (5) avec un manchon extérieur (7) d'une liaison de couplage (3) selon l'une des revendications précédentes par l'utilisation d'un système selon l'une des revendications 7 à 10, le couplage étant établi par la mise sous pression de la chambre hydraulique (9) fournissant une force de frottement entre le manchon intérieur (5) et le manchon extérieur (7), comprenant les étapes de :
• lecture d'une valeur de pression prédéterminée dans un dispositif de mémoire (21) de la liaison de couplage (3) par connexion sans fil,
• affichage des informations relatives à la valeur de pression prédéterminée et des informations de pression transférées sur un écran,
• mise sous pression de la chambre hydraulique (9) par une pompe (19).

12. Procédé selon la revendication 11,
après finalisation de la mise sous pression, une valeur de pression finale étant transférée et stockée dans le dispositif de mémoire (21).

13. Procédé selon la revendication 11 ou 12,
la valeur de pression prédéterminée étant transférée à un dispositif portatif (33) et les données de mise sous pression étant transférées au dispositif portatif (33) et les deux informations étant affichées par le dispositif portatif.

14. Procédé selon l'une des revendications 11 à 13, **caractérisé par** les étapes de :
• l'utilisation du dispositif portatif (33) pour lire une identification individuelle de la liaison de couplage (3) fixée sur la liaison de couplage (3) et
• le dispositif portatif (33) fournit la valeur de pression prédéterminée,
• le dispositif portatif (33) commande la mise sous pression de la chambre hydraulique (9) et affiche de préférence la progression de la mise sous pression.
